# EUROPÄISCHE PATENTANMELDUNG

(11) **EP 2 613 059 A2**
(43) Veröffentlichungstag der Anmeldung: **10.07.2013**
(21) Anmeldenummer: 12007988.4
(22) Anmeldetag: 28.11.2012
(51) Int. Cl.: F15B 11/00

(54) **Vorrichtung zur Ansteuerung eines fluidbetätigten Aktuators bei einer Arbeitsgerätschaft**

(30) Priorität: 03.01.2012 DE 102012000045
(71) Anmelder: Hydac System GmbH, 66280 Sulzbach/Saar (DE)
(72) Erfinder: Huth, Heinz-Peter, 66802 Überherrn (DE); Komma, Georg, 69234 Dielheim (DE)
(74) Vertreter: Bartels & Partner

(57) **Zusammenfassung**

Vorrichtung zur Ansteuerung eines fluidbetätigten Aktuators bei einer Arbeitsgerätschaft.

Eine Vorrichtung (24) zur Ansteuerung eines fluidbetätigten Aktuators (16) bei einer Arbeitsgerätschaft, wobei eine erste Aktuatorseite (KS) und eine von der ersten Aktuatorseite (KS) fluiddicht getrennte zweite Aktuatorseite (RS) über eine erste (A) bzw. eine zweite Fluidverbindung (B) wechselweise mit einer Druckversorgung (P) verbindbar sind, und wobei in der ersten (A) und der zweiten Fluidverbindung (B) jeweils eine erste (18) bzw. eine zweite Ventileinheit (20) zur Druckbeaufschlagung der jeweiligen Aktuatorseite (KS, RS) mit einem jeweils vorgebbaren Druck angeordnet sind, ist dadurch gekennzeichnet, dass die erste (18) und die zweite Ventileinheit (20) derart eingestellt und zwischen die Ventileinheiten (18, 20) und der Druckversorgung (P) eine dritte Ventileinheit (22) derart geschaltet ist, dass bei einer Verbindung der ersten Fluidverbindung (A) mit der Druckversorgung (P) Fluid zur Aufrechterhaltung eines in jedweder Stellung der Arbeitsgerätschaft im Wesentlichen konstanten Drucks an der zweiten Aktuatorseite (RS) entweder zur ersten Aktuatorseite (KS) oder zur zweiten Aktuatorseite (RS) geführt wird.

## Beschreibung

Die Erfindung betrifft eine Vorrichtung zur Ansteuerung eines fluidbetätigten Aktuators bei einer Arbeitsgerätschaft, wobei eine erste Aktuatorseite und eine von der ersten Aktuatorseite fluiddicht getrennte zweite Aktuatorseite über eine erste bzw. eine zweite Fluidverbindung wechselweise mit einer Fluidversorgung verbindbar sind, und wobei in der ersten und der zweiten Fluidverbindung jeweils eine erste bzw. eine zweite Ventileinheit zur Druckbeaufschlagung der jeweiligen Aktuatorseite mit einem jeweils vorgebbaren Druck angeordnet sind.

Derartige Vorrichtungen in Zusammenhang mit fluidbetätigten Aktuatoren sind bei Arbeitsgerätschaften, wie beispielsweise landwirtschaftlichen Anhängern, weit verbreitet und finden beispielsweise als hydraulische Federungen Einsatz. Bei einem derartigen Einsatz als Federung umfasst der Aktuator typischerweise einen Arbeitszylinder, dessen Position bzw. Niveau entsprechend einer Änderung der Position des zu federnden Geräteteils, wie einer Deichsel, hydraulisch verfahrbar ist. Über die beiden Ventileinheiten wird der an der jeweiligen Aktuatorseite anstehende Fluiddruck vorgegeben bzw. eingestellt, wobei in der Regel an der dem zu federnden Teil zugewandten Aktuatorseite ein höherer Fluiddruck ansteht bzw. eingestellt ist. Im Betrieb können an einem zur Federung eingesetzten Arbeitszylinder sogenannte negative Lasten auftreten, bei denen ein Kolben durch eine äußere Kraft zur dem zu federnden Teil zugeordneten Aktuatorseite hin aus dem Arbeitszylinder geführt wird. Derartige negative Lasten können beispielsweise bei einer Deichsel durch Verlagerung der Beladung der Arbeitsgerätschaft hinter die letzte Achse auftreten. Um einer derartigen ungewollten Aktuatorbewegung entgegenzuwirken, sind elektrische Schaltventile und Sensoren bekannt, welche eine entsprechende Aktuatorbewegung erfassen und zur Niveauregulierung an der entsprechenden Aktuatorseite Fluid zu- bzw. abführen. Weiter sind Lösungen bekannt, die keine Elektromagnetventile umfassen, bei einer entsprechenden ausfahrenden Aktuatorbewegung den entsprechenden Fluiddruck an der jeweiligen Aktuatorseite jedoch nicht zuverlässig konstant halten können, anders ausgedrückt einer derartigen Aktuatorbewegung nicht zuverlässig entgegenwirken können.

Die Erfindung stellt sich die Aufgabe, mit wenigen, einfach aufgebauten Komponenten, insbesondere ohne zusätzliche elektrische oder elektromagnetische Komponenten, eine Lastkompensation bei einem in einer Arbeitsgerätschaft insbesondere zur Federung eingesetzten Aktuator bereit zu stellen.

Diese Aufgabe wird gelöst durch eine Vorrichtung mit den Merkmalen von Patentanspruch 1 in seiner Gesamtheit. Eine erfindungsgemäße Vorrichtung zur Ansteuerung eines fluidbetätigten Aktuators bei einer Arbeitsgerätschaft zeichnet sich dadurch aus, dass die erste und die zweite Ventileinheit derart eingestellt und zwischen die Ventileinheiten und die Druckversorgung eine dritte Ventileinheit derart geschaltet ist, dass bei einer Verbindung der ersten Fluidverbindung mit der Druckversorgung Fluid zur Aufrechterhaltung eines in jedweder Stellung der Arbeitsgerätschaft im Wesentlichen konstanten Drucks an der zweiten Aktuatorseite entweder zur ersten Aktuatorseite oder zur zweiten Aktuatorseite geführt wird.

Durch die erfindungsgemäße Vorrichtung wird erreicht, dass bei einer in der jeweiligen Stellung der Arbeitsgerätschaft von einer äußeren Kraft bzw. Last bewirkten Aktuatorbewegung der Druck auf der zweiten Aktuatorseite derart erhöht bzw. erniedrigt wird, dass eine im Wesentlichen konstante Druckbeaufschlagung auf der zweiten Kolbenseite zur Beibehaltung einer konstanten Aktuatorposition erreicht und somit der Aktuatorbewegung entgegengewirkt wird. Dementsprechend wird bei einer negativ wirkenden Last ein Ausziehen des Aktuators aus einem Zylinder weitestgehend verhindert. Die erfindungsgemäße Vorrichtung stellt insoweit eine Kompensation der die Position des Aktuators störend beeinflussender Lasten bereit. Hierbei ist zu beachten, dass eine derartige Lastkompensation bzw. Druckniveauregulierung ausschließlich über hydraulische Komponenten, wie die Ventileinheiten, erreicht wird. Kostenintensive und störungsanfällige elektrische und elektromagnetische Komponenten sind somit entbehrlich.

Bei einer bevorzugten Ausführungsform der erfindungsgemäßen Vorrichtung ist die dritte Ventileinheit derart zwischen die erste und die zweite Fluidverbindung geschaltet, dass diese bei einer Druckänderung an der zweiten Aktuatorseite die jeweilige Fluidverbindung von der Druckversorgung zur zweiten Aktuatorseite freigibt. Besonders bevorzugt ist die dritte Ventileinheit dabei als Wechselventil ausgebildet. Durch das Wechselventil wird erreicht, dass der jeweils höhere Druck der in der ersten und in der zweiten Fluidverbindung anstehenden Drücke zur zweiten Kolbenseite geführt wird.

Weiter ist es vorteilhaft, dass die erste und/oder die zweite Ventileinheit als einstellbare Druckventile ausgebildet sind. Hierbei ist insbesondere an der einer Ringseite zugeordneten, zweiten Ventileinheit ein höherer Druck als an der einer Kolbenseite zugeordneten, ersten Ventileinheit eingestellt. In hydraulischen Systemen für Arbeitsgerätschaften, wie Baufahrzeuge oder landwirtschaftliche Geräte, sind mitunter recht hohe Drücke erforderlich, weshalb an der ersten und/oder der zweiten Ventileinheit ein Druck von 80 bar oder mehr eingestellt sein kann.

Weiter ist es vorteilhaft, dass die zur ersten und zur zweiten Kolbenseite führenden, erste und zweite Fluidverbindungen wechselweise mit einem Tankanschluss verbindbar sind. Somit kann erforderlichenfalls Fluid aus dem Tank in die Vorrichtung geführt oder aus der Vorrichtung zurück in den Tank geführt werden. Vorteilhafterweise sind in einer ersten Schaltstellung der erfindungsgemäßen Vorrichtung die erste Fluidverbindung mit der Druckversorgung und die zweite Fluidverbindung mit dem Tankanschluss verbunden und in einer zweiten Schaltstellung die zweite Fluidverbindung mit der Druckversorgung und die erste Fluidverbindung mit dem Tankanschluss verbunden. Zweckmäßigerweise ist ein bevorzugt als 4/4-Wege-Steuergerät ausgebildetes Steuergerät, das vorzugsweise in mindestens einer Schwimmstellung betreibbar ist, zum Wechsel zwischen mindestens der ersten Schaltstellung und der zweiten Schaltstellung vorgesehen.

Die Erfindung umfasst weiter eine Aktuatoreinheit umfassend mindestens einen fluidbetätigten Aktuator und mindestens eine dem jeweiligen Aktuator zugeordnete erfindungsgemäße Vorrichtung zur Ansteuerung. Der Aktuator kann einen in einem Zylinder geführten Kolben umfassen, wobei vorzugsweise die erste Aktuatorseite kolbenseitig und die zweite Aktuatorseite ringseitig angeordnet ist. Auf diese Weise wird eine Lastkompensation an der Ringseite des Kolbens bei einer Änderung der Zylinderposition in beiden Richtungen erreicht. Für die erfindungsgemäße konstante Druckbeaufschlagung an der Ringseite ist die arbeitsgerätschaftsseitige bzw. fahrzeugseitige dritte Ventileinheit wesentlich.

Weitere Vorteile und Merkmale der Erfindung ergeben sich aus den Figuren und der nachfolgenden Beschreibung der Zeichnung. Erfindungsgemäß können die vorstehend genannten und die noch weiter angeführten Merkmale jeweils einzeln oder in beliebigen Kombinationen miteinander verwirklicht sein. Die in den Figuren gezeigten Merkmale sind rein schematisch und nicht maßstäblich zu verstehen. Es zeigt:

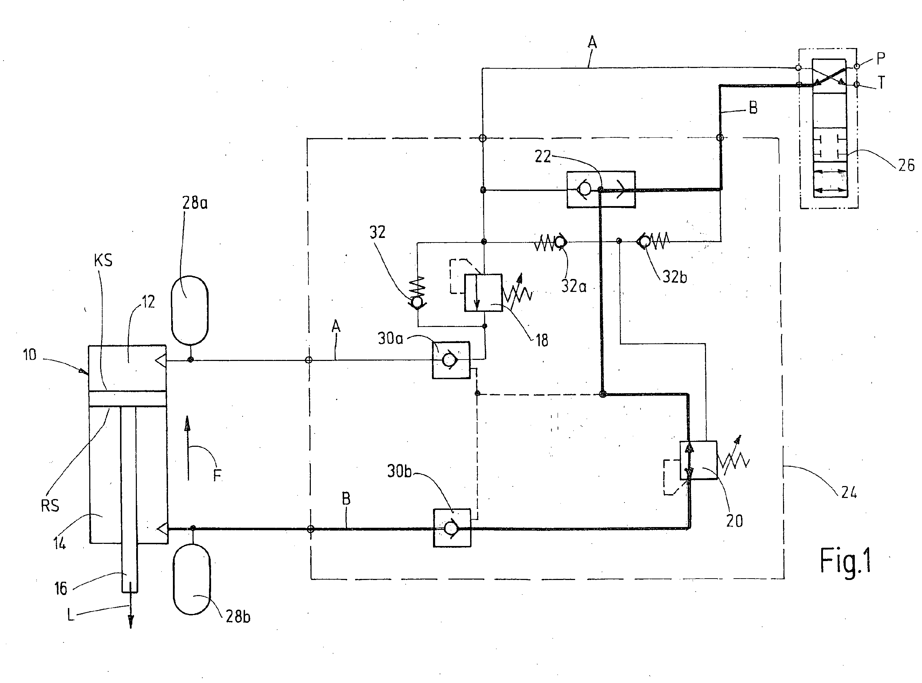

- Fig. 1 bis 3: jeweils einen Schaltplan einer beispielhaften Vorrichtung zur Ansteuerung eines fluidbetätigten Aktuators, geschaltet zwischen einen Aktuator und eine Druckversorgung.

In den Fig. 1 bis 3 ist jeweils ein Arbeitszylinder 10 mit einem ersten Zylinderraum 12, einem zweiten Zylinderraum 14 und einem als Kolben ausgebildeten Aktuator 16 gezeigt. Der Aktuator 16 ist im Arbeitszylinder 10 geführt und unterteilt diesen entsprechend seiner jeweiligen Aktuatorposition in den ersten Zylinderraum 12 und den zweiten Zylinderraum 14. Über eine erste Fluidverbindung A ist der erste Zylinderraum 12 wechselweise mit einer Druckversorgung P oder einem Tankanschluss T verbindbar, entsprechend der zweite Zylinderraum 14 über eine zweite Fluidverbindung B. In der ersten Fluidverbindung A ist eine als Druckbegrenzungsventil ausgebildete erste Ventileinheit 18 angeordnet, über welche ein Druck im ersten Zylinderraum 12 und an der dortigen ersten Aktuatorseite KS, auch Kolbenseite genannt, des Aktuators 16 eingestellt ist. Entsprechend ist in der zweiten Fluidverbindung B eine zweite als Druckminderventil ausgebildete Ventileinheit 20 angeordnet, über welche ein Druck im zweiten Zylinderraum 14 und an der entsprechenden zweiten Aktuatorseite RS, auch Ringseite genannt, des Aktuators 16 eingestellt ist. Der Arbeitszylinder 10 ist im gezeigten Beispiel zur Federung einer Arbeitsgerätschaft, hier einer Deichsel eines landwirtschaftlichen Anhängers, eingesetzt, weshalb der über die zweite Ventileinheit 20 eingestellte Druck höher als der über die erste Ventileinheit 18 eingestellte Druck gewählt ist.

Zwischen die erste 18 und die zweite Ventileinheit 20 und den als Versorgungsanschluss P und Tankanschluss T ausgebildeten Fluidanschlüssen ist eine dritte Ventileinheit 22 vorgesehen, die als Wechselventil ausgebildet ist und zu den Fluidanschlüssen hin sowohl an die erste Fluidverbindung A als auch an die zweite Fluidverbindung B angeschlossen ist und aktuatorseitig an die zur zweiten Ventileinheit 20 bzw. zur zweiten Aktuatorseite RS führende zweite Fluidverbindung B angeschlossen ist. Die drei Ventileinheiten 18, 20, 22 sind Teil einer hydraulischen Vorrichtung 24 zur Ansteuerung des fluidbetätigten Aktuators 16.

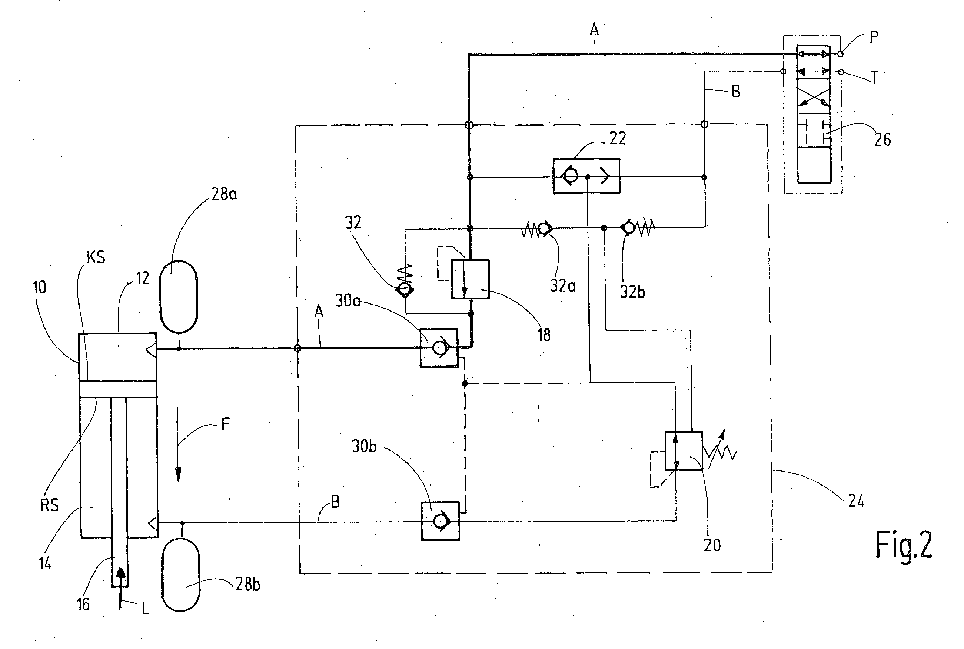

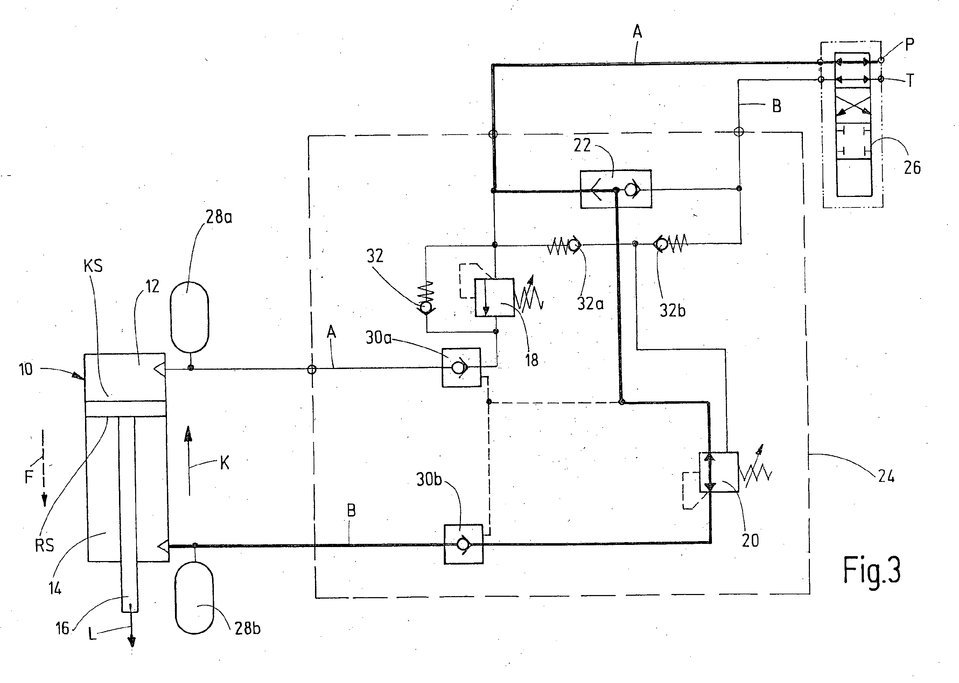

Der jeweilige Fluidanschluss der Vorrichtung 24 wird über ein als 4/4-Wege-Steuergerät ausgebildetes Steuergerät 26 eingestellt, welches in einer in den Fig. 2 und 3 gezeigten ersten Schaltstellung die erste Fluidverbindung A mit der Druckversorgung P sowie die zweite Fluidverbindung B mit dem Tankanschluss T verbindet und in einer in Fig. 1 gezeigten zweiten Schaltstellung die zweite Fluidverbindung B mit der Druckversorgung P sowie die erste Fluidverbindung A mit dem Tankanschluss T verbindet. Des Weiteren ist das Steuergerät 26 in einer Schwimmstellung betreibbar. Die Vorrichtung 24 umfasst weiter schaltbare Rückstellventile 30a, 30b in der ersten bzw. zweiten Fluidverbindung A, B, ein parallel zur ersten Ventileinheit 18 geschaltetes Rückschlagventil 32 und weitere Rückschlagventile 32a, 32b zwischen erster und zweiter Ventileinheit 18, 20 und der zweiten Fluidverbindung B, anders ausgedrückt parallel zur dritten Ventileinheit 22. Zwischen der Vorrichtung 24 und dem Arbeitszylinder 10 können weiter Hydrospeicher 28a, 28b in der ersten bzw. zweiten Fluidverbindung A, B angeordnet sein.

In der in Fig. 1 gezeigten zweiten Schaltstellung wird Fluid von der Druckversorgung P über die fett markierte zweite Fluidverbindung B zum zweiten Zylinderraum RS geführt und der Druck an der zweiten Aktuatorseite RS entsprechend der zweiten Ventileinheit 20 eingestellt. Fluid kann aus dem ersten Zylinderraum 12 über die erste Fluidverbindung A zurück in den Tank T geführt werden. Da der Druck auf der zweiten Aktuatorseite RS größer als der Druck auf der ersten Aktuatorseite KS ist, wird der Aktuator 16 entsprechend der Feder- bzw. Aktuatorbewegung F in die gezeigte Position geführt und aufgrund der konstanten Druckbeaufschlagung in dieser gehalten. Die Federbewegung F wirkt entgegen einer am Aktuator 16 angreifenden Last L. In der zweiten Schaltstellung ist die als Wechselventil ausgebildete dritte Ventileinheit 22 derart geschaltet bzw. geöffnet, dass Fluid von der Druckversorgung P über die zweite Fluidverbindung B und die zweite Ventileinheit 20 zum zweiten Zylinderraum 14 bzw. zur zweiten Aktuatorseite RS geführt ist und der entsprechende Fluidweg freigegeben ist.

In der in Fig. 2 gezeigten ersten Schaltstellung wird Fluid von der Druckversorgung P über die fett markierte erste Fluidverbindung A und die erste Ventileinheit 18 zum ersten Zylinderraum 12 geführt und der dort anstehende Druck an der ersten Aktuatorseite KS entsprechend der ersten Ventileinheit 18 eingestellt. Die als Wechselventil ausgebildete dritte Ventileinheit 22 ist wie in Fig. 1 derart geschaltet, dass die zweite Ventileinheit 20 und entsprechend der zweite Zylinderraum 14 über die zweite Fluidverbindung B mit den Fluidanschlüssen, in Fig. 2 dem Tankanschluss T, verbunden und eine Verbindung zur ersten Fluidverbindung A versperrt ist. Über diese in Fig. 2 gezeigte Schaltstellung wird an der ersten Aktuatorseite KS eine einer am Aktuator 16 angreifenden Last L entgegenwirkende Federbewegung F derart erzeugt, dass der Aktuator 16 in der gezeigten Stellung bzw. Position verbleibt.

In der gezeigten ersten Schaltstellung kann nun, wie in Fig. 3 gezeigt, eine negative, in Richtung der Federbewegung F (gestrichelt eingezeichnet) gerichtete Last L am Aktuator 16 angreifen. Zu deren Kompensation ist eine über einen entsprechenden Druck an der zweiten Aktuatorseite RS bzw. im zweiten Zylinderraum 14 anstehenden Druck erzeugte Kompensationsbewegung K erforderlich. Die Kompensationsbewegung K wird durch die Vorrichtung 24 dadurch eingestellt, dass die dritte Ventileinheit 22 entsprechend der durch die Last L geänderten Druckverhältnisse im ersten bzw. zweiten Ventilraum 12, 14 ein in Fig. 3 fett markierter Fluidweg von der Druckversorgung P über die erste Fluidverbindung A und weiter die zweite Fluidverbindung B zur zweiten Ventileinheit 20 und weiter zum zweiten Ventilraum 14 bzw. zur zweiten Aktuatorseite RS freigegeben wird. Somit wird durch die dritte Ventileinheit 22 als Teil der Vorrichtung 24 die negative Last L als solche "erkannt" und durch ein entsprechendes Umschalten der dritten Ventileinheit 22 zur Erzeugung einer Kompensationsbewegung K des Aktuators 16 derart kompensiert, dass ein konstanter Druck an der zweiten Aktuatorseite RS ansteht und der Aktuator 16 insoweit die gewählte Aktuatorposition beibehält. Die in Fig. 3 gezeigte Kompensationsbewegung K in der ersten Schaltstellung der Vorrichtung 24 entspricht der in Fig. 1 gezeigten Federbewegung F in der zweiten Schaltstellung.

Um den Federungszylinder bzw. Arbeitszylinder 10 beispielsweise einer Deichselfederung über das Steuergerät 26 in Position zu bringen und gleichzeitig auf der Ringseite RS einen festen, positionsunabhängigen Druckwert einzustellen, wird der Druck an der zweiten, der Ringseite RS zugeordneten Ventileinheit 20 eingestellt. Zur Druckeinstellung bzw. - regelung an der Ringseite RS ist die zweite Ventileinheit 20 in jeder Positionsänderung am Arbeitszylinder 10 mit dem Tank T und einem Primärdruck P größer als dem Einstelldruck zu versorgen. Die Anordnung der Ventile 22, 32a, 32b verbindet die zweite Ventileinheit 20 fluidführend mit dem Tank T bzw. der (Primär-)Druckversorgung P. Über das Wechselventil 22 wird jeweils die Primärdruck (P)-Verbindung als höherer Druck auf die zweite Ventileinheit 20 geleitet und über die Anordnung der Rückschlagventile 32a, 32b ein Abfluss von der zweiten Ventileinheit 20 zum Tank gewährleistet. Die erste Ventileinheit 18 ermöglicht eine sichere Primärdruckversorgung der zweiten Ventileinheit 20, insbesondere da der erste Einstellwert kleiner ist als der zweite Einstellwert entsprechend dem erforderlichen ringseitigen Druck.

## Patentansprüche

1. Vorrichtung (24) zur Ansteuerung eines fluidbetätigten Aktuators (16) bei einer Arbeitsgerätschaft,
- wobei eine erste Aktuatorseite (KS) und eine von der ersten Aktuatorseite (KS) fluiddicht getrennte zweite Aktuatorseite (RS) über eine erste (A) bzw. eine zweite Fluidverbindung (B) wechselweise mit einer Druckversorgung (P) verbindbar sind, und
- wobei in der ersten (A) und der zweiten Fluidverbindung (B) jeweils eine erste (18) bzw. eine zweite Ventileinheit (20) zur Druckbeaufschlagung der jeweiligen Aktuatorseite (KS, RS) mit einem jeweils vorgebbaren Druck angeordnet sind,
- **dadurch gekennzeichnet, dass** die erste (18) und die zweite Ventileinheit (20) derart eingestellt und zwischen die Ventileinheiten (18, 20) und der Druckversorgung (P) eine dritte Ventileinheit (22) derart geschaltet ist, dass bei einer Verbindung der ersten Fluidverbindung (A) mit der Druckversorgung (P) Fluid zur Aufrechterhaltung eines in jedweder Stellung der Arbeitsgerätschaft im Wesentlichen konstanten Drucks an der zweiten Aktuatorseite (RS) entweder zur ersten Aktuatorseite (KS) oder zur zweiten Aktuatorseite (RS) geführt wird.

2. Vorrichtung nach Anspruch 1, **dadurch gekennzeichnet, dass** die dritte Ventileinheit (22) derart zwischen die erste (A) und die zweite Fluidverbindung (B) geschaltet ist, dass diese bei einer Druckänderung an der zweiten Aktuatorseite (RS) die jeweilige Fluidverbindung (A, B) von der Druckversorgung (P) zur zweiten Aktuatorseite (RS) freigibt.

3. Vorrichtung nach Anspruch 2, **dadurch gekennzeichnet, dass** die dritte Ventileinheit (22) als Wechselventil ausgebildet ist.

4. Vorrichtung nach einem der vorhergehenden Ansprüche, **dadurch gekennzeichnet, dass** die erste (18) und/oder die zweite Ventileinheit (20) als einstellbare Druckventile ausgebildet sind, insbesondere wobei an der einer Ringseite (RS) zugeordneten, zweiten Ventileinheit (20) ein höherer Druck als an der einer Kolbenseite (KS) zugeordneten, ersten Ventileinheit (18) eingestellt ist.

5. Vorrichtung nach einem der vorhergehenden Ansprüche, **dadurch gekennzeichnet, dass** die erste (A) und die zweite Fluidverbindung (B) wechselweise mit einem Tankanschluss (T) verbindbar sind.

6. Vorrichtung nach Anspruch 5, **dadurch gekennzeichnet, dass** in einer ersten Schaltstellung die erste Fluidverbindung (A) mit der Druckversorgung (P) und die zweite Fluidverbindung (B) mit dem Tankanschluss (T) verbunden sind, und dass in einer zweiten Schaltstellung die zweite Fluidverbindung (B) mit der Druckversorgung (P) und die erste Fluidverbindung (A) mit dem Tankanschluss (T) verbunden sind.

7. Vorrichtung nach Anspruch 6, **dadurch gekennzeichnet, dass** ein bevorzugt als 4/4-Wege-Steuergerät ausgebildetes Steuergerät (26), das vorzugsweise in mindestens einer Schwimmstellung betreibbar ist, zum Wechsel zwischen zumindest der ersten Schaltstellung und der zweiten Schaltstellung vorgesehen ist.

8. Aktuatoreinheit umfassend mindestens einen fluidbetätigten Aktuator (16) und mindestens eine dem jeweiligen Aktuator (16) zugeordnete Vorrichtung (24) zur Ansteuerung nach einem der vorhergehenden Ansprüche.

9. Aktuatoreinheit nach Anspruch 8, **dadurch gekennzeichnet, dass** der bevorzugt zur Federung eingesetzte Aktuator (16) einen bewegbar in einem Arbeitszylinder (10) geführten Kolben umfasst.
